# EUROPÄISCHE PATENTSCHRIFT

(11) **EP 4 034 432 B1**
(45) Veröffentlichungstag und Bekanntmachung des Hinweises auf die Patenterteilung: **22.11.2023**
(21) Anmeldenummer: 20789828.9
(22) Anmeldetag: 11.09.2020
(51) Int. Cl.: B60R 22/405, B60R 22/34

(54) **ANORDNUNG MIT SPERRRAD UND HEBEL SOWIE GURTAUFROLLER MIT SPERRRAD UND HEBEL**
ARRANGEMENT WITH RATCHET WHEEL AND LEVER AND BELT RETRACTOR WITH RATCHET WHEEL AND LEVER
DISPOSITION AVEC ROUE À ROCHET ET LEVIER DE VERROUILLAGE ET RÉTRACTEUR DE CEINTURE AVEC ROUE À ROCHET ET LEVIER DE VERROUILLAGE

(30) Priorität: 26.09.2019 DE 102019126029
(43) Veröffentlichungstag der Anmeldung: 03.08.2022
(73) Patentinhaber: Joyson Safety Systems Germany GmbH, 63743 Aschaffenburg (DE)
(72) Erfinder: FELBER, Carsten, 89343 Jettingen-Scheppach (DE); SCHWER, Thomas, 89257 Illertissen (DE)
(74) Vertreter: Fischer, Uwe
(86) Internationale Anmeldenummer: PCT/DE2020/200076
(87) Internationale Veröffentlichungsnummer: WO 2021/058068

(56) Entgegenhaltungen:
- DE-A1- 10 352 025
- DE-A1- 10 358 562
- DE-A1-102016 006 750
- DE-U1- 20 113 656

## Beschreibung

Die Erfindung bezieht sich auf eine Anordnung mit einem einen Lagerpin aufweisenden Sperrrad und einer als Hebel ausgebildeten und eine Öffnung aufweisenden Sensormasse, wobei der Lagerpin des Sperrrades in die Öffnung des Hebels hineinragt und den Hebel drehbar lagert, und einer einen Hebelarm des Hebels beaufschlagenden Feder zur Einleitung einer Kraft in den Hebel.

Eine solche Anordnung ist aus der Europäischen Offenlegungsschrift EP 3 098 120 A2 bekannt.

Der Erfindung liegt die Aufgabe zugrunde, eine Anordnung mit Sperrrad und Hebel anzugeben, bei dem eine besonders reibungsarme Lagerung des Hebels am Lagerpin erreicht wird und gleichzeitig das Auftreten von Klappergeräuschen im Falle von Schwingungen gering ist.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Querschnittsfläche der Öffnung größer als die Querschnittsfläche des Lagerpins ist und der Hebel um den Lagerpin radiales Spiel aufweist, die Querschnittsfläche eines der beiden nachfolgend genannten Elemente, der Öffnung im Hebel oder der Querschnittsfläche des Lagerpins, in radialer Richtung eine buchtförmige Vertiefung aufweist, die Querschnittsfläche des anderen der beiden genannten Elemente, also der Querschnittsfläche des Lagerpins oder der Öffnung im Hebel, in radialer Richtung einen nasenförmigen Vorsprung aufweist und die Federkraft der Feder den nasenförmigen Vorsprung und die buchtförmige Vertiefung aufeinander drückt und die Auflagestelle des nasenförmigen Vorsprungs auf der buchtförmigen Vertiefung eine Schwenkachse für eine Schwenkbewegung des Hebels bildet.

Ein wesentlicher Vorteil der erfindungsgemäßen Anordnung ist darin zu sehen, dass durch die erfindungsgemäße Ausgestaltung der Öffnung mit einer buchtförmigen Vertiefung und der erfindungsgemäßen Ausgestaltung des Lagerpins mit nasenförmigem Vorsprung eine sehr reibungsarme Lagerung des Hebels um den Vorsprung herum erreicht werden kann.

Ein weiterer wesentlicher Vorteil der erfindungsgemäßen Anordnung besteht darin, dass bei der beschriebenen Lagerung Klappergeräusche im Falle von Schwingungen sehr gering gehalten werden können.

Die Querschnittsfläche der Öffnung und die Querschnittsfläche des Lagerpins sind vorzugsweise jeweils rotationssymmetriefrei.

Der Hebel ist vorzugsweise zweiarmig oder zumindest zweiarmig, beispielsweise dreiarmig.

Mit Blick auf die Reduktion von Klappergeräuschen wird es als vorteilhaft angesehen, wenn die Federkraft in Richtung der Öffnung und des Lagerpins ausgerichtet ist oder zumindest überwiegend in Richtung der Öffnung und des Lagerpins ausgerichtet ist.

Besonders vorteilhaft ist es, wenn eine fiktive Verbindungslinie, die an dem Einwirkungspunkt der Federkraft auf den Hebel beginnt und sich entlang des Richtungsvektors der Federkraft erstreckt, durch die Querschnittsfläche der Öffnung verläuft. Bei der letztgenannten Ausführungsform lässt sich der geringe wirksame Krafthebelarm der Federkraft durch eine erhöhte Federkraft kompensieren und derart der nasenförmige Vorsprung und die buchtförmige Vertiefung stärker aufeinander drücken, wodurch Klappergeräusche vermieden oder zumindest signifikant reduziert werden können. Der gleiche Effekt wird erzielt, wenn bei identischer bzw. geringerer Federkraft eine leichtere Sensormasse eingesetzt wird.

Mit Blick auf einen Einsatz der Anordnung bei einem Gurtaufroller wird es als vorteilhaft angesehen, wenn bei einer relativen Schwenkbewegung zwischen der buchtförmigen Vertiefung und dem nasenförmigen Vorsprung, also einer Schwenkbewegung der buchtförmigen Vertiefung um den nasenförmigen Vorsprung oder umgekehrt, ein Hebelende eines Hebelarmes des Hebels in eine fahrzeugfeste, außenliegende und mit Nocken versehene Kontur schwenkbar ist, wodurch das Sperrrad abgebremst wird.

Das radiale Spiel ist vorzugsweise derart groß bemessen, dass bei einem unmittelbaren Aufeinandertreffen zwischen einer Hebelspitze des Hebelendes und dem Nocken entgegen der Federkraft der Feder die buchtförmige Vertiefung an dem nasenförmigen Vorsprung vorbei oder der nasenförmige Vorsprung an der buchtförmigen Vertiefung vorbei translatorisch bewegt werden kann.

Der Lagerpin und die Öffnung weisen vorzugsweise in einem Bereich, der der durch die Feder eingeleiteten Kraft zugewandt ist, jeweils eine erste Querschnittskontur auf, welche jeweils abweichend von einer zweiten Querschnittskontur in einem der eingeleiteten Kraft abgewandten Bereich verläuft.

Alternativ können der Lagerpin und/oder die Öffnung jeweils drehsymmetrisch ausgestaltet sein, beispielsweise derart, dass sie jeweils auf der kraftnahen Seite und der gegenüberliegenden kraftfernen Seite gleiche Querschnittskonturen aufweisen.

Die Querschnittskonturen von Lagerpin und Öffnung sind vorzugsweise derart ausgebildet, dass sich der Hebel bei eingeleiteter Federkraft selbst am Lagerpin zentriert, und zwar derart, dass die buchtförmige Vertiefung an dem nasenförmigen Vorsprung anliegt.

Die buchtförmige Vertiefung weist bevorzugt zwei unter einem Winkel aufeinandertreffende Flanken auf, die in einem vorgegebenen Flankenwinkel von vorzugsweise weniger als 160° aufeinander stehen.

Der nasenförmige Vorsprung weist bevorzugt zwei unter einem Winkel aufeinandertreffende Flanken auf, die in einem vorgegebenen Flankenwinkel von vorzugsweise weniger als 160° aufeinander stehen.

Der Flankenwinkel des nasenförmigen Vorsprungs ist vorzugsweise kleiner als der Flankenwinkel der buchtförmigen Vertiefung.

Bei dem nasenförmigen Vorsprung und/oder der buchtförmigen Vertiefung verlaufen die aufeinandertreffenden Flanken vorzugsweise geradlinig.

Mit Blick auf eine reproduzierbare Fertigung wird es als vorteilhaft angesehen, wenn bei dem nasenförmigen Vorsprung und/oder der buchtförmigen Vertiefung die aufeinandertreffenden Flanken durch einen gekrümmten, insbesondere einen vorgegebenen Übergangsradius aufweisenden, Übergangsbereich verbunden sind.

Der Bereich, an dem die Flanken aufeinandertreffen, oder der gekrümmte Übergangsbereich (so vorhanden) zwischen den aufeinandertreffenden Flanken bildet vorzugsweise die Schwenkachse für die Schwenkbewegung des Hebels um den Lagerpin.

Die Flanken und, so vorhanden, die gekrümmten Übergangsbereiche ermöglichen vorzugsweise eine Bewegung des Hebels quer zur Richtung der durch die Feder eingeleiteten Federkraft. Eine solche Ausgestaltung vermeidet in vorteilhafter Weise eine Blockade der Anordnung bzw. die Beschädigung der Hebelspitze, wenn der Hebel oder ein Hebelende auf einen Nocken einer fahrzeugfesten, außenliegenden und mit Nocken versehenen Kontur trifft. Auch werden durch eine derartige translatorische Bewegung des Hebels, sich in der Lagerung des Hebels am Lagerpin bildende, Ablagerungen wirksam entfernt.

Die Erfindung bezieht sich darüber hinaus auf einen Gurtaufroller, der mit einer Anordnung, wie sie oben beschrieben worden ist, ausgestattet ist und damit selbst eine Anordnung wie oben beschrieben bildet.

Die Erfindung wird nachfolgend anhand von Ausführungsbeispielen näher erläutert; dabei zeigen beispielhaft
- Figur 1: ein Ausführungsbeispiel für Bestandteile eines erfindungsgemäßen Gurtaufrollers, der mit einem Ausführungsbeispiel für eine erfindungsgemäße Anordnung ausgestattet ist,
- Fig. 2-7: ein erstes Ausführungsbeispiel für Komponenten, die für den Gurtaufroller gemäß Figur 1 geeignet sind, näher im Detail, und
- Figur 8: ein zweites Ausführungsbeispiel für Komponenten, die für den Gurtaufroller gemäß Figur 1 geeignet sind, näher im Detail.

In den Figuren werden der Übersicht halber für identische oder vergleichbare Komponenten stets dieselben Bezugszeichen verwendet.

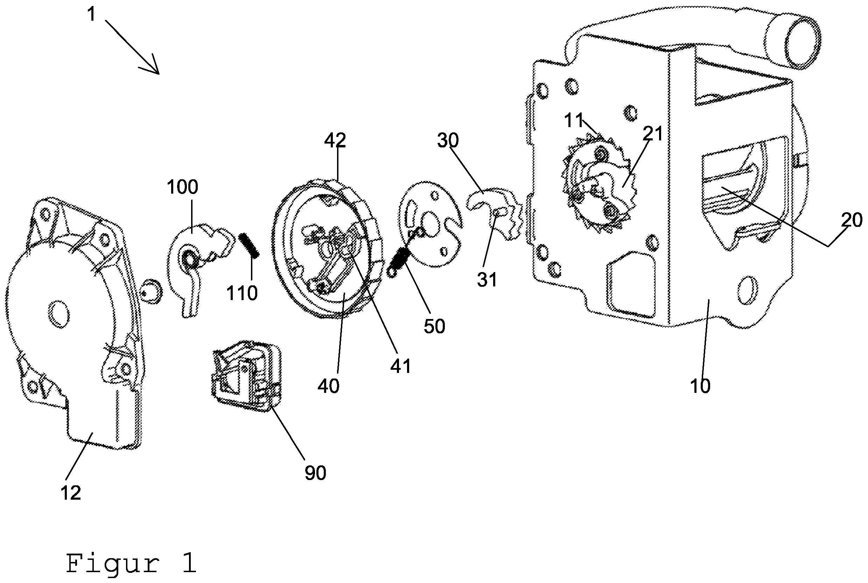

Die Figur 1 zeigt Bestandteile eines Ausführungsbeispiels für einen erfindungsgemäßen Gurtaufroller 1, der mit einem Ausführungsbeispiel für eine erfindungsgemäße Anordnung ausgestattet ist und damit auch selbst eine erfindungsgemäße Anordnung bildet.

Der Gurtaufroller 1 weist einen Rahmen 10 auf, in dem eine Gurtspule 20 des Gurtaufrollers 1 drehbar gehalten wird. Der Rahmen 10 ist mit einer rahmenfesten Verzahnung 11 ausgestattet.

In einer Vertiefung 21 eines mit der Gurtspule 20 drehfest verbundenen Teiles ist eine Sperrklinke 30 eingesetzt, die im eingeschwenkten bzw. eingefahrenen Zustand von der rahmenfesten Verzahnung 11 des Rahmens 10 getrennt ist und einer Rotation der Gurtspule 20 nicht im Wege steht. Im ausgeschwenkten bzw. ausgefahrenen Zustand der Sperrklinke 30 greift diese in die rahmenfeste Verzahnung 11 ein und blockiert eine Rotation der Gurtspule 20 bzw. einen Gurtbandauszug aus dem Gurtaufroller 1.

Bei dem Ausführungsbeispiel gemäß Figur 1 ist zum Verschwenken der Sperrklinke 30 ein Sperrrad 40 vorgesehen, das mit einer Führungskulisse 41 ausgestattet ist. In oder durch die Führungskulisse 41 des Sperrrades 40 erstreckt sich ein Klinkenpin 31 der Sperrklinke 30.

Dreht sich das Sperrrad 40 synchron mit der Gurtspule 20 mit, wenn es also zu keiner Relativdrehung zwischen dem Sperrrad 40 und der Gurtspule 20 kommt, so wird eine Zugfeder 50, die auf den Klinkenpin 31 einwirkt, die Sperrklinke 30 in ihre eingefahrene Position schwenken und dort halten, sodass die Gurtspule 20 ohne Eingriff mit der rahmenfesten Verzahnung 11 frei drehen kann.

Kommt es hingegen zu einer Verzögerung des Sperrrades 40 relativ zur Gurtspule 20 und zu einer Relativdrehung zwischen dem Sperrrad 40 und der Gurtspule 20, so wird die Führungskulisse 41 des Sperrrades 40 auf den Klinkenpin 31 einwirken und zu einem Nachaußenschwenken der Sperrklinke 30 führen, sodass diese in die rahmenfeste Verzahnung 11 eingreift und die Gurtspule 20 blockiert.

Eine Relativdrehung zwischen dem Sperrrad 40 und der Gurtspule 20 kann bei dem Ausführungsbeispiel gemäß Figur 1 durch einen Fahrzeugsensor 90 oder eine Sensormasse in Form eines vorzugsweise zweiarmigen Hebels 100 hervorgerufen werden.

Bei dem Fahrzeugsensor 90 gemäß Figur 1 kann es sich beispielsweise um einen Kugelsensor handeln, der im Falle einer abrupten Beschleunigung des Gurtstraffers 1 bzw. eines mit dem Gurtaufroller 1 ausgestatteten Fahrzeugs einen nicht weiter gezeigten Sensorhebel in eine Außenverzahnung 42 des Sperrrades 40 ausschwenkt und das Sperrrad 40 bremst oder blockiert, wodurch nachfolgend die Sperrklinke 30 ausgefahren und ein Gurtbandauszug blockiert wird.

Die Sensormasse in Form des zweiarmigen Hebels 100 dient im Unterschied zu dem Fahrzeugsensor 90 dazu, im Falle eines ruckartigen Gurtbandauszugs eine weitere Rotation der Gurtspule 20 und damit einen weiteren Gurtbandauszug zu unterbinden. Der Hebel 100 wirkt mit einer in der Figur 1 nicht weiter dargestellten, mit Nocken versehenen Kontur zusammen, die auf der Innenseite eines Gehäuses 12 des Gurtaufrollers 1 angeordnet ist.

Eine Feder 110 dient dazu, den Hebel 100 im Ruhezustand in eine definierte Ausgangslage zu drehen, sodass der Hebel 100 mit der mit Nocken versehenen Kontur des Gehäuses 12 im Ruhezustand nicht in Eingriff steht. Unter Ruhezustand ist dabei auch ein Zustand zu verstehen, bei dem der Hebel 100 bei Rotation der Gurtspule 20 unterhalb einer definierten Rotationsbeschleunigung nicht oder nur geringfügig ausgelenkt wird.

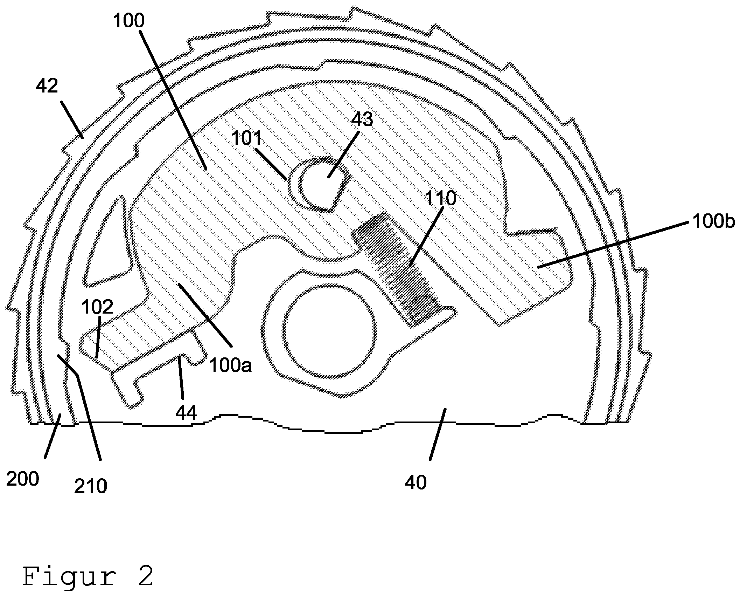

Die Figuren 2 bis 7 zeigen ein erstes Ausführungsbeispiel für den Hebel 100, das Sperrrad 40 und die Ausrichtung der Feder 110 gemäß Figur 1 näher im Detail.

In Figur 2 erkennt man den Hebel 100, der um einen am Sperrrad 40 angeformten zylindrischen Lagerpin 43 drehbar gelagert ist. Hierzu weist der Hebel 100 eine ebenfalls zylindrisch ausgebildete Öffnung 101 auf, in die der Lagerpin 43 des Sperrrades 40 hinein- oder hindurchragt.

Die Figur 2 zeigt darüber hinaus, dass der in der Figur 2 linke Hebelarm 100a in der in der Figur 2 gezeigten Ruhelage des Hebels 100 auf einem Anschlag 44 des Sperrrades 40 aufliegt. In dieser Ruhelage ist ein am linken Hebelarm 100a vorhandenes Hebelende 102 von der mit Nocken 210 versehenen Kontur 200, die auf der Innenseite des Gehäuses 12 gemäß Figur 1 angebracht ist, getrennt.

Auf den in der Figur 2 rechten Hebelarm 100b wirkt die Feder 110 ein und leitet eine Kraft mit einem definierten, wirksamen Krafthebelarm in den Hebel 100 ein. Die Federkraft der beispielsweise als Druckfeder ausgeführten Feder 110 führt so zu einem Drehmoment auf den Hebel 100, durch den der linke Hebelarm 100a auf den Anschlag 44 geschwenkt wird.

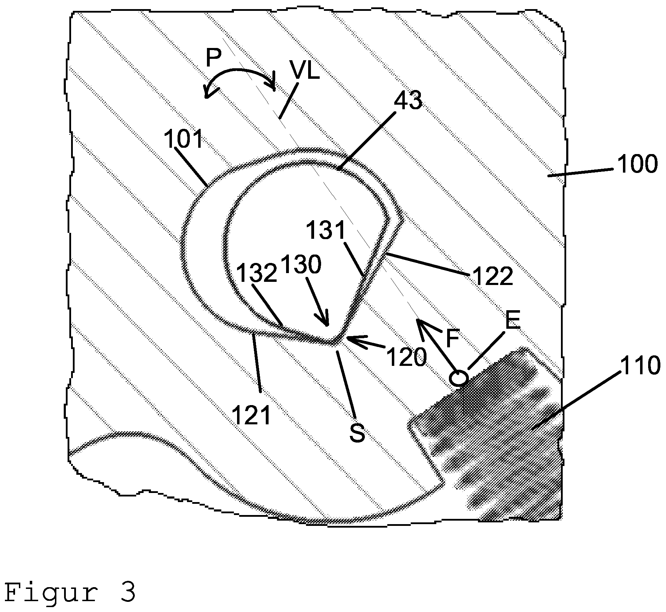

Die Figur 3 zeigt die Öffnung 101 und den Lagerpin 43 gemäß Figur 2 näher im Detail. Es lässt sich erkennen, dass die Querschnittsfläche der Öffnung 101 größer als die Querschnittsfläche des Lagerpins 43 ist und der Hebel 100 um den Lagerpin 43 sehr großes radiales Spiel aufweist.

Auch ist ersichtlich, dass die Querschnittsfläche der Öffnung 101 und die Querschnittsfläche des Lagerpins 43 in radialer Richtung jeweils rotationssymmetriefrei sind.

Die Öffnung 101 bzw. deren Querschnittsfläche weist in radialer Richtung eine buchtförmige Vertiefung 120 auf, und der Lagerpin 43 bzw. dessen Querschnittsfläche weist in radialer Richtung einen nasenförmigen Vorsprung 130 auf. Die Federkraft F der Feder 110 drückt die buchtförmige Vertiefung 120 auf den nasenförmigen Vorsprung 130 und damit die buchtförmige Vertiefung 120 und den nasenförmigen Vorsprung 130 aufeinander. Die Auflagestelle der buchtförmigen Vertiefung 120 auf dem nasenförmigen Vorsprung 130 bildet eine (im Querschnitt gemäß den Figuren 2 und 3 quasi punktförmige und entlang der Drehachse des Sperrrades 40 gesehen linienförmige) Schwenkachse S für eine Schwenkbewegung des Hebels 100 entlang der Pfeilrichtung P. Mit anderen Worten kann die Auflagestelle punkt- und/oder linienförmig sein, beispielsweise wie in den Figuren gezeigt punktförmig im Querschnitt und linienförmig senkrecht zur Bildebene.

Die Figuren 2 und 3 lassen auch erkennen, dass die Federkraft F in Richtung der Öffnung 101 und des Lagerpins 43 ausgerichtet ist oder zumindest überwiegend in Richtung der Öffnung 101 und des Lagerpins 43 ausgerichtet ist. So ist ersichtlich, dass eine fiktive Verbindungslinie VL, die an dem Einwirkungspunkt E der Federkraft F auf den Hebel 100 beginnt und sich entlang des Richtungsvektors (siehe Pfeilrichtung der Federkraft) der Federkraft F erstreckt, durch die Querschnittsfläche der Öffnung 101 und durch die Querschnittsfläche des Lagerpins 43 verläuft. Durch diese Ausrichtung der Federkraft F kann der geringe wirksame Krafthebelarm durch eine erhöhte Federkraft F kompensiert werden, wodurch der Hebel 100 stärker auf den Lagerpin 43 gedrückt wird und so Klappergeräusche des Hebels 100 im Falle mechanischer Schwingungen vermieden oder zumindest deutlich reduziert werden. Der gleiche Effekt wird erzielt, wenn bei identischer bzw. geringerer Federkraft F eine leichtere Sensormasse eingesetzt wird.

Darüber hinaus zeigt die Figur 3, dass die Querschnittskonturen von Lagerpin 43 und Öffnung 101 derart ausgebildet sind, dass sich der Hebel 100 bei eingeleiteter Federkraft F selbst am Lagerpin 43 zentriert, und zwar derart, dass die buchtförmige Vertiefung 120 an dem nasenförmigen Vorsprung 130 anliegt.

Die buchtförmige Vertiefung 120 weist bei dem Ausführungsbeispiel gemäß den Figuren 2 bis 7 zwei unter einem Winkel aufeinandertreffende Flanken 121 und 122 auf, die in einem vorgegebenen Flankenwinkel von vorzugsweise weniger als 160° aufeinander stehen.

Der nasenförmige Vorsprung 130 weist bei dem Ausführungsbeispiel gemäß den Figuren 2 bis 7 ebenfalls zwei unter einem Winkel aufeinandertreffende Flanken 131 und 132 auf, die in einem vorgegebenen Flankenwinkel von vorzugsweise weniger als 160° aufeinander stehen.

Der Flankenwinkel des nasenförmigen Vorsprungs 130 ist, wie in der Figur 3 ersichtlich, kleiner als der Flankenwinkel der buchtförmigen Vertiefung 120, um eine Schwenkbewegung des Hebels 100 um die Schwenkachse S entlang der Pfeilrichtung P zu ermöglichen.

Mit Blick auf eine reproduzierbare Fertigung wird es als vorteilhaft angesehen, wenn bei dem nasenförmigen Vorsprung 130 und der buchtförmigen Vertiefung 120 die aufeinandertreffenden Flanken 131, 132 und 121, 122 jeweils durch einen gekrümmten, insbesondere einen vorgegebenen Übergangsradius aufweisenden, Übergangsbereich verbunden sind. Die Übergangsbereiche, insbesondere der Mittelpunkt des nasenförmigen Vorsprungs 130, definieren in diesem Falle die Schwenkachse S.

Die Flanken 131, 132 und 121, 122 des nasenförmigen Vorsprungs 130 und der buchtförmigen Vertiefung 120 verlaufen in vorteilhafter Weise geradlinig.

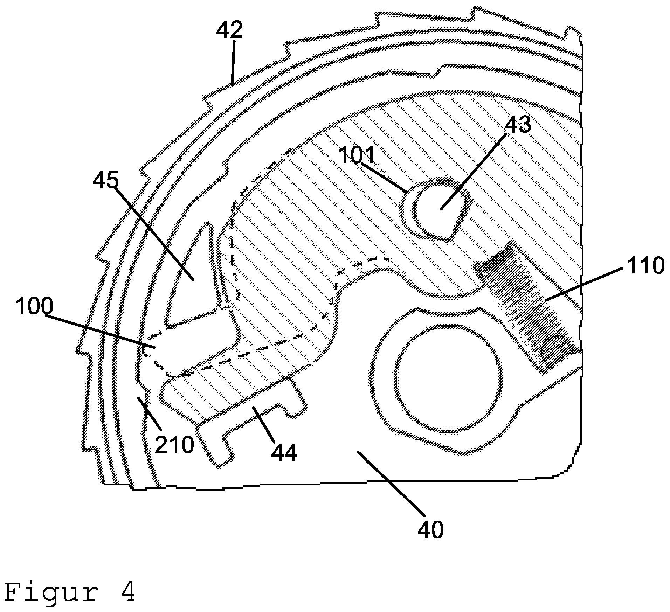

Die Figur 4 zeigt den Hebel 100 und das Sperrrad 40 im Falle eines abrupten Gurtbandauszugs einer damit einhergehenden hohen Rotationsbeschleunigung der Gurtspule 20. Die dabei auf den Hebel 100 einwirkende resultierende Kraft greift am linken Hebel 100a mit einem wirksamen Krafthebelarm an und führt so zu einem Drehmoment auf den Hebel 100, durch den der linke Hebelarm 100a von dem Anschlag 44 abgehoben wird. Eine gestrichelte Linie stellt dabei die maximal mögliche ausgelenkte Stellung des Hebels 100 dar, bei dem dieser an einem zweiten Anschlag 45 des Sperrrads 40 anliegt.

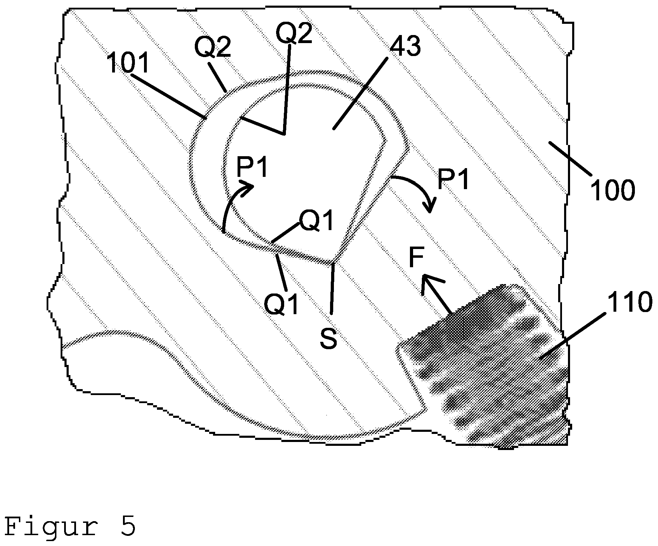

Die Figur 5 zeigt die in der Figur 4 gezeigte ausgelenkte Stellung des Hebels 100 mit Blick auf die Ausrichtung der Öffnung 101 am Lagerpin 43 näher im Detail. Es lässt sich erkennen, dass die Öffnung 101 entlang der Pfeilrichtung P1 in Figur 5 (verglichen mit der Figur 3) um die Schwenkachse S verschwenkt worden ist.

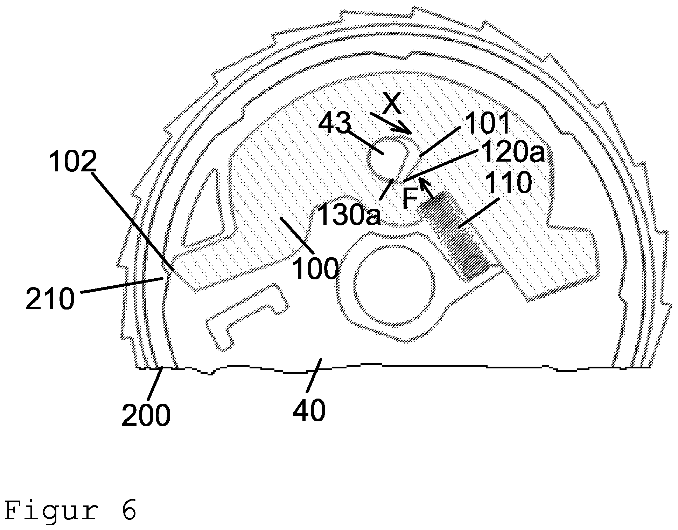

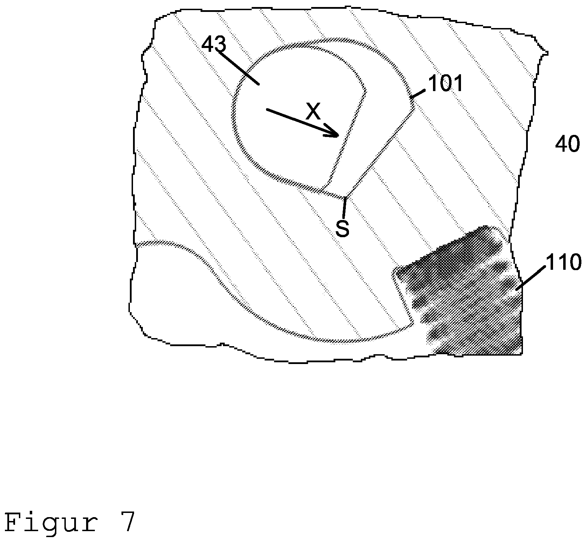

Die Figuren 6 und 7 lassen erkennen, dass aufgrund des radialen Spiels zwischen der Öffnung 101 und dem Lagerpin 43 und der beschriebenen Formgestaltung der buchtförmigen Vertiefung 120 und des nasenförmigen Vorsprungs 130 auch eine translatorische Bewegung der Öffnung 101 bzw. des Hebels 100 relativ zu dem Lagerpin 43 entlang der Pfeilrichtung X möglich ist, wenn beispielsweise das Hebelende 102 des Hebels 100 auf einen Nocken 210 der Kontur 200 stößt. In einem solchen Fall kann sich nämlich, wie gezeigt, der Hebel 100 quer zur Richtung der durch die Feder 110 eingeleiteten Federkraft F bewegen und damit das Buchtzentrum 120a bzw. die Buchtmitte der buchtförmigen Vertiefung 120 von der Nasenspitze 130a des nasenförmigen Vorsprungs 130 wegbewegen.

Bei dem Ausführungsbeispiel gemäß den Figuren 2 bis 7 weisen der Lagerpin 43 und die Öffnung 101 in einem Bereich, der der durch die Feder 110 eingeleiteten Kraft F zugewandt ist, jeweils eine erste Querschnittskontur Q1 (siehe Figur 5) auf, welche jeweils abweichend von einer zweiten Querschnittskontur Q2 (siehe Figur 5) in einem der eingeleiteten Kraft F abgewandten Bereich verläuft. Mit anderen Worten sind die Querschnittsflächen von Lagerpin 43 und Öffnung 101 auf der kraftnahen Seite jeweils anders ausgestaltet bzw. ausgeformt als auf der kraftfernen Seite; alternativ ist auch eine drehsymmetrische Formgestaltung möglich, bei der die Querschnittsflächen von Lagerpin 43 und Öffnung 101 auf der kraftnahen Seite jeweils genauso ausgestaltet bzw. ausgeformt sind wie auf der kraftfernen Seite.

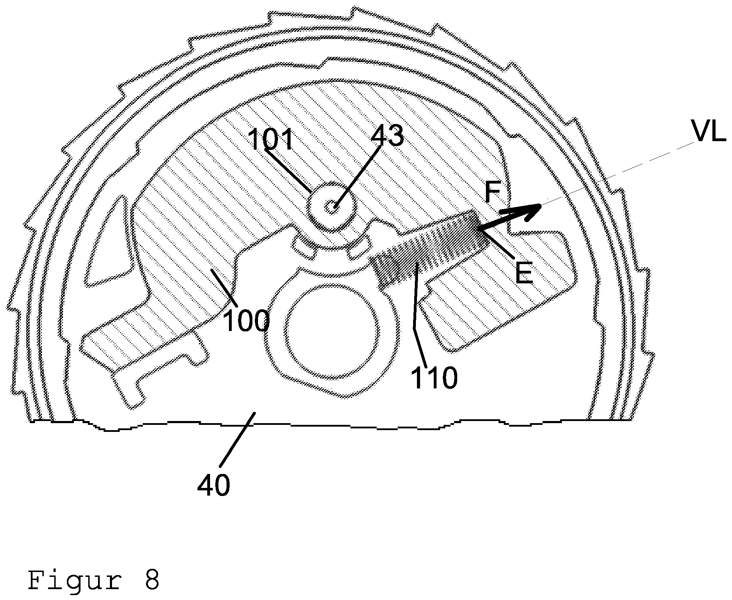

Die Figur 8 zeigt ein zweites Ausführungsbeispiel für den Hebel 100, das Sperrrad 40 und die Ausrichtung der Feder 110 gemäß Figur 1 näher im Detail.

Bei dem Ausführungsbeispiel gemäß Figur 8 ist die Federkraft F nicht in Richtung auf die Öffnung 101 und den Lagerpin 43 ausgerichtet, sondern quer oder im wesentlichen quer dazu. So ist ersichtlich, dass eine fiktive Verbindungslinie VL, die an dem Einwirkungspunkt E der Federkraft F auf den Hebel 100 beginnt und sich entlang des Richtungsvektors (siehe Pfeilrichtung der Federkraft) der Federkraft F erstreckt, nicht mehr durch die Querschnittsfläche der Öffnung 101 oder durch die Querschnittsfläche des Lagerpins 43 verläuft.

Durch die in Figur 8 gezeigte Ausrichtung der Federkraft F wird der Hebel 100 zwar weniger effizient als bei dem ersten Ausführungsbeispiel gemäß den Figuren 2 bis 7 auf den Lagerpin 43 gedrückt, jedoch bleiben wegen der (in Figur 8 nicht weiter gezeigten) buchtförmigen Ausgestaltung der Öffnung 101 und der (in Figur 8 nicht weiter gezeigten) nasenförmigen Ausgestaltung des Lagerpins 43, beides auf der der Hebelspitze des Hebelarms 102 zugewandten Seite der Lagerung des Hebels 100 angeordnet, auch bei dem Ausführungsbeispiel gemäß Figur 8 Klappergeräusche des Hebels 100 recht gering.

Im Übrigen gelten die obigen Ausführungen im Zusammenhang mit den Figuren 1 bis 7, insbesondere hinsichtlich möglicher und vorteilhafter Ausgestaltungen der Öffnung 101 und des Lagerpins 43 bei dem Ausführungsbeispiel gemäß Figur 8 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Gurtaufroller
- 10: Rahmen
- 11: rahmenfeste Verzahnung
- 12: Gehäuse
- 20: Gurtspule
- 21: Vertiefung
- 30: Sperrklinke
- 31: Klinkenpin
- 40: Sperrrad
- 41: Führungskulisse
- 42: Außenverzahnung
- 43: Lagerpin
- 44: Anschlag
- 45: Anschlag
- 50: Zugfeder
- 90: Fahrzeugsensor
- 100: Hebel
- 100a: linker Hebelarm
- 100b: rechter Hebelarm
- 101: Öffnung
- 102: Hebelende
- 110: Feder
- 120: buchtförmige Vertiefung
- 120a: Buchtzentrum
- 121: Flanke
- 122: Flanke
- 130: nasenförmiger Vorsprung
- 130a: Nasenspitze
- 131: Flanke
- 132: Flanke
- 200: Kontur
- 210: Nocken

- E: Einwirkungspunkt
- F: Federkraft
- P: Pfeilrichtung
- P1: Pfeilrichtung
- Q1: Querschnittskontur
- Q2: Querschnittskontur
- S: Schwenkachse
- VL: fiktive Verbindungslinie
- X: Pfeilrichtung

## Patentansprüche

1. Anordnung mit
- einem einen Lagerpin (43) aufweisenden Sperrrad (40) und
- einer als Hebel (100) ausgebildeten und eine Öffnung (101) aufweisenden Sensormasse, wobei der Lagerpin (43) des Sperrrades (40) in die Öffnung (101) des Hebels (100) hineinragt und den Hebel (100) drehbar lagert, und
- einer einen Hebelarm des Hebels (100) beaufschlagenden Feder (110) zur Einleitung einer Federkraft (F) in den Hebel (100),
**dadurch gekennzeichnet, dass**
- die Querschnittsfläche der Öffnung (101) größer als die Querschnittsfläche des Lagerpins (43) ist und der Hebel (100) um den Lagerpin (43) radiales Spiel aufweist,
- die Querschnittsfläche eines der beiden nachfolgend genannten Elemente, der Öffnung (101) im Hebel (100) oder der Querschnittsfläche des Lagerpins (43), in radialer Richtung eine buchtförmige Vertiefung (120) aufweist,
- die Querschnittsfläche des anderen der beiden genannten Elemente, also der Querschnittsfläche des Lagerpins (43) oder der Öffnung (101) im Hebel (100), in radialer Richtung einen nasenförmigen Vorsprung (130) aufweist und
- die Federkraft (F) der Feder (110) den nasenförmigen Vorsprung (130) und die buchtförmige Vertiefung (120) aufeinander drückt und die Auflagestelle des nasenförmigen Vorsprungs (130) auf der buchtförmigen Vertiefung (120) eine Schwenkachse (S) für eine Schwenkbewegung des Hebels (100) bildet.

2. Anordnung nach Anspruch 1,
**dadurch gekennzeichnet, dass**
die Federkraft (F) in Richtung der Öffnung (101) und des Lagerpins (43) ausgerichtet ist oder zumindest überwiegend in Richtung der Öffnung (101) und des Lagerpins (43) ausgerichtet ist.

3. Anordnung nach einem der voranstehenden Ansprüche,
**dadurch gekennzeichnet, dass**
eine fiktive Verbindungslinie (VL), die an dem Einwirkungspunkt (E) der Federkraft (F) auf den Hebel (100) beginnt und sich entlang des Richtungsvektors der Federkraft (F) erstreckt, durch die Querschnittsfläche der Öffnung (101) verläuft.

4. Anordnung nach einem der voranstehenden Ansprüche,
**dadurch gekennzeichnet, dass**
bei einer relativen Schwenkbewegung zwischen der buchtförmigen Vertiefung (120) und dem nasenförmigen Vorsprung (130), also einer Schwenkbewegung der buchtförmigen Vertiefung (120) um den nasenförmigen Vorsprung (130) oder umgekehrt, ein Hebelende (102) eines Hebelarmes (100a, 100b) des Hebels (100) in eine fahrzeugfeste, außenliegende und mit Nocken (210) versehene Kontur (200) schwenkbar ist, wodurch das Sperrrad (40) abgebremst wird.

5. Anordnung nach Anspruch 4,
**dadurch gekennzeichnet, dass**
das radiale Spiel derart groß bemessen ist, dass bei einem unmittelbaren Aufeinandertreffen zwischen einer Hebelspitze des Hebelendes (102) und dem Nocken (210) entgegen der Federkraft (F) der Feder (110) die buchtförmige Vertiefung (120) an dem nasenförmigen Vorsprung (130) vorbei oder der nasenförmige Vorsprung (130) an der buchtförmigen Vertiefung (120) vorbei translatorisch bewegt werden kann.

6. Anordnung nach einem der voranstehenden Ansprüche,
**dadurch gekennzeichnet, dass**
der Lagerpin (43) und die Öffnung (101) in einem Bereich, der der durch die Feder (110) eingeleiteten Kraft zugewandt ist, jeweils eine erste Querschnittskontur (Q1) aufweisen, welche jeweils abweichend von einer zweiten Querschnittskontur (Q2) in einem der eingeleiteten Kraft abgewandten Bereich verläuft.

7. Anordnung nach einem der voranstehenden Ansprüche,
**dadurch gekennzeichnet, dass**
die Querschnittskonturen von Lagerpin (43) und Öffnung (101) derart ausgebildet sind, dass sich der Hebel (100) bei eingeleiteter Federkraft (F) selbst am Lagerpin (43) zentriert, und zwar derart, dass die buchtförmige Vertiefung (120) an dem nasenförmigen Vorsprung (130) anliegt.

8. Anordnung nach einem der voranstehenden Ansprüche,
**dadurch gekennzeichnet, dass**
die buchtförmige Vertiefung (120) zwei unter einem Winkel aufeinandertreffende Flanken (121, 122) aufweist, die in einem vorgegebenen Flankenwinkel von vorzugsweise weniger als 160° aufeinander stehen.

9. Anordnung nach einem der voranstehenden Ansprüche,
**dadurch gekennzeichnet, dass**
der nasenförmige Vorsprung (130) zwei unter einem Winkel aufeinandertreffende Flanken (131, 132) aufweist, die in einem vorgegebenen Flankenwinkel von vorzugsweise weniger als 160° aufeinander stehen.

10. Anordnung nach einem der voranstehenden Ansprüche,
**dadurch gekennzeichnet, dass**
der Flankenwinkel des nasenförmigen Vorsprungs (130) kleiner als der Flankenwinkel der buchtförmigen Vertiefung (120) ist.

11. Anordnung nach einem der voranstehenden Ansprüche,
**dadurch gekennzeichnet, dass**
- bei dem nasenförmigen Vorsprung (130) und/oder der buchtförmigen Vertiefung (120) die aufeinandertreffenden Flanken durch einen gekrümmten, insbesondere einen vorgegebenen Übergangsradius aufweisenden, Übergangsbereich verbunden sind, und/oder
- bei dem nasenförmigen Vorsprung (130) und/oder der buchtförmigen Vertiefung (120) die aufeinandertreffenden Flanken geradlinig verlaufen.

12. Anordnung nach einem der voranstehenden Ansprüche,
**dadurch gekennzeichnet, dass**
der Bereich, an dem die Flanken aufeinandertreffen, oder der gekrümmte Übergangsbereich zwischen den aufeinandertreffenden Flanken die Schwenkachse (S) für die Schwenkbewegung des Hebels (100) um den Lagerpin (43) bildet.

13. Anordnung nach einem der voranstehenden Ansprüche,
**dadurch gekennzeichnet, dass**
die Flanken und, so vorhanden, die gekrümmten Übergangsbereiche eine Bewegung des Hebels (100) quer zur Richtung der durch die Feder (110) eingeleiteten Federkraft (F) ermöglichen.

14. Anordnung nach einem der voranstehenden Ansprüche,
**dadurch gekennzeichnet, dass**
die Querschnittsfläche der Öffnung (101) und die Querschnittsfläche des Lagerpins (43) jeweils rotationssymmetriefrei sind.

15. Gurtaufroller (1),
**dadurch gekennzeichnet, dass**
der Gurtaufroller (1) mit einer Anordnung nach einem der voranstehenden Ansprüche ausgestattet ist.

## Claims

1. Assembly having
- a ratchet wheel (40) which has a bearing pin (43); and
- a sensor mass which is configured as a lever (100) and has an opening (101), wherein the bearing pin (43) of the ratchet wheel (40) protrudes into the opening (101) of the lever (100) and rotatably mounts the lever (100); and
- a spring (110) which impinges a lever arm of the lever (100) for introducing a spring force (F) into the lever (100),
**characterized in that**
- the cross-sectional area of the opening (101) is larger than the cross-sectional area of the bearing pin (43), and the lever (100) has a radial clearance about the bearing pin (43);
- the cross-sectional area of one of the two elements mentioned hereunder, i.e. of the opening (101) in the lever (100) or of the cross-sectional area of the bearing pin (43), in the radial direction has a concave depression (120);
- the cross-sectional area of the other of the two elements mentioned, i.e. of the cross-sectional area of the bearing pin (43) or of the opening (101) in the lever (100), in the radial direction has a nose-shaped protrusion (130); and
- the spring force (F) of the spring (110) pushes the nose-shaped protrusion (130) and the concave depression (120) onto one another, and the contact point of the nose-shaped protrusion (130) on the concave depression (120) forms a pivot axis (S) for a pivoting movement of the lever (100).

2. Assembly according to Claim 1,
**characterized in that**
the spring force (F) is aligned in the direction of the opening (101) and of the bearing pin (43), or is at least largely aligned in the direction of the opening (101) and of the bearing pin (43).

3. Assembly according to one of the preceding claims,
**characterized in that**
a fictitious connecting line (VL), which starts at the point of action (E) of the spring force (F) acting on the lever (100) and extends along the directional vector of the spring force (F), runs through the cross-sectional area of the opening (101) .

4. Assembly according to one of the preceding claims,
**characterized in that**
in a relative pivoting movement between the concave depression (120) and the nose-shaped protrusion (130), thus a pivoting movement of the concave depression (120) about the nose-shaped protrusion (130) or vice versa, a lever end (102) of a lever arm (100a, 100b) of the lever (100) is pivotable into an external contour (200) which is fixed to the vehicle and provided with cams (210), as a result of which the ratchet wheel (40) is decelerated.

5. Assembly according to Claim 4,
**characterized in that**
the radial clearance is sized in such a manner that in the event of a direct meeting between a lever tip of the lever end (102) and the cam (210) counter to the spring force (F) of the spring (110), the concave depression (120) can be moved in a translatory manner past the nose-shaped protrusion (130), or the nose-shaped protrusion (130) can be moved in a translatory manner past the concave depression (120).

6. Assembly according to one of the preceding claims,
**characterized in that**
the bearing pin (43) and the opening (101), in a region that faces the force introduced by the spring (110), have in each case a first cross-sectional contour (Q1) which runs in each case so as to deviate from a second cross-sectional contour (Q2) in a region that faces away from the introduced force.

7. Assembly according to one of the preceding claims,
**characterized in that**
the cross-sectional contours of the bearing pin (43) and of the opening (101) are configured in such a manner that the lever (100) self-centres on the bearing pin (43) when a spring force (F) is introduced, specifically in such a manner that the concave depression (120) bears on the nose-shaped protrusion (130).

8. Assembly according to one of the preceding claims,
**characterized in that**
the concave depression (120) has two flanks (121, 122) which meet at an angle and are mutually disposed at a predefined flank angle of preferably less than 160°.

9. Assembly according to one of the preceding claims,
**characterized in that**
the nose-shaped protrusion (130) has two flanks (131, 132) which meet at an angle and are mutually disposed at a predefined flank angle of preferably less than 160°.

10. Assembly according to one of the preceding claims,
**characterized in that**
the flank angle of the nose-shaped protrusion (130) is smaller than the flank angle of the concave depression (120).

11. Assembly according to one of the preceding claims,
**characterized in that**
- in the nose-shaped protrusion (130) and/or the concave depression (120) the meeting flanks are connected by a curved transition region which in particular has a predefined transition radius; and/or
- in the nose-shaped protrusion (130) and/or the concave depression (120) the meeting flanks run in a rectilinear manner.

12. Assembly according to one of the preceding claims,
**characterized in that**
the region where the flanks meet, or the curved transition region between the meeting flanks, forms the pivot axis (S) for the pivoting movement of the lever (100) about the bearing pin (43).

13. Assembly according to one of the preceding claims,
**characterized in that**
the flanks and, if present, the curved transition regions enable a movement of the lever (100) transverse to the direction of the spring force (F) introduced by the spring (110).

14. Assembly according to one of the preceding claims,
**characterized in that**
the cross-sectional area of the opening (101) and the cross-sectional area of the bearing pin (43) are in each case free of a rotational symmetry.

15. Belt retractor (1),
**characterized in that**
the belt retractor (1) is equipped with an assembly according to one of the preceding claims.

## Revendications

1. Agencement comprenant
- une roue à rochet (40) présentant une broche (43) formant pivot et
- une masse formant capteur réalisée sous la forme d'un levier (100) et présentant une ouverture (101), la broche (43) qui forme axe de rotation de la roue à rochet (40) s'étendant à l'intérieur de l'ouverture (101) du levier (100) et supportant le levier (100) de manière rotative, et
- un ressort (110) agissant sur un bras de levier du levier (100) pour induire une force élastique (F) dans le levier (100),
**caractérisé en ce que**
- la surface en section transversale de l'ouverture (101) est supérieure à la surface en section transversale de la broche (43) formant pivot et le levier (100) présente un jeu radial autour de la broche (43) formant pivot,
- la surface en section transversale de l'un des deux éléments mentionnés ci-après, l'ouverture (101) dans le levier (100) ou la surface en section transversale de la broche (43) formant pivot, présente dans la direction radiale, un creux (120) en forme de baie,
- la surface en section transversale de l'autre des deux éléments mentionnés, c'est-à-dire la surface en section transversale de la broche (43) formant pivot ou de l'ouverture (101) du levier (100), présente dans la direction radiale une saillie (130) en forme de nez, et
- la force élastique (F) du ressort (110) presse la saillie (130) en forme de nez et le creux (120) en forme de baie l'un sur l'autre et le point d'appui de la saillie (130) en forme de nez sur le creux (120) en forme de baie forme un axe de pivotement (S) pour un mouvement de pivotement du levier (100).

2. Agencement selon la revendication 1,
**caractérisé en ce que**
la force du ressort (F) est orientée en direction de l'ouverture (101) et de la broche (43) formant pivot ou est orientée au moins principalement en direction de l'ouverture (101) et de la broche (43) formant pivot.

3. Agencement selon l'une des revendications précédentes,
**caractérisé en ce que**
une ligne de jonction fictive (VL), qui commence au point d'application (E) de la force du ressort (F) sur le levier (100) et s'étend le long du vecteur de direction de la force du ressort (F), passe par la surface en section transversale de l'ouverture (101).

4. Agencement selon l'une des revendications précédentes,
**caractérisé en ce que**
lors d'un mouvement de pivotement relatif entre le creux (120) en forme de baie et la saillie (130) en forme de nez, c'est-à-dire un mouvement de pivotement du creux (120) en forme de baie autour de la saillie (130) en forme de nez ou inversement, une extrémité (102) d'un bras de levier (100a, 100b) du levier (100) est apte à pivoter dans un contour (200) solidaire du véhicule, situé à l'extérieur et pourvu de cames (210), ce qui permet de freiner la roue à rochet (40).

5. Agencement selon la revendication 4,
**caractérisé en ce que**
le jeu radial est dimensionné de telle sorte que, lors d'une rencontre directe entre une pointe de l'extrémité du levier (102) et la came (210), le creux (120) en forme de baie est apte à être déplacé en translation au-delà de la saillie (130) en forme de nez, ou la saillie (130) en forme de nez est apte à être déplacée en translation au-delà du creux (120) en forme de baie, à l'encontre de la force élastique (F) du ressort (110).

6. Agencement selon l'une des revendications précédentes,
**caractérisé en ce que**
la broche (43) formant pivot et l'ouverture (101) présentent chacune, dans une zone qui est tournée vers la force induite par le ressort (110), un premier contour en section transversale (Q1) qui s'écarte respectivement d'un deuxième contour en section transversale (Q2) dans une zone opposée à la force induite.

7. Agencement selon l'une des revendications précédentes,
**caractérisé en ce que**
les contours en section transversale de la broche (43) formant pivot et de l'ouverture (101) sont conçus de telle sorte que le levier (100) se centre sur la broche (43) formant pivot lorsque la force élastique (F) est appliquée, et ce de telle sorte que le creux (120) en forme de baie s'applique contre la saillie (130) en forme de nez.

8. Agencement selon l'une des revendications précédentes,
**caractérisé en ce que**
le creux (120) en forme de baie présente deux flancs (121, 122) qui se rejoignent en formant un angle, et qui sont agencés l'un par rapport à l'autre selon un angle de flancs prédéterminé, de préférence inférieur à 160°.

9. Agencement selon l'une des revendications précédentes,
**caractérisé en ce que**
la saillie (130) en forme de nez présente deux flancs (131, 132) qui se rejoignent en formant un angle et qui forment un angle de flancs prédéterminé, de préférence inférieur à 160°.

10. Agencement selon l'une des revendications précédentes,
**caractérisé en ce que**
l'angle des flancs de la saillie (130) en forme de nez est inférieur à l'angle des flancs du creux (120) en forme de baie.

11. Agencement selon l'une des revendications précédentes, **caractérisé en ce que**
- dans le cas de la saillie (130) en forme de nez et/ou du creux (120) en forme de baie, les flancs qui se rejoignent sont reliés par une zone de transition courbe, présentant en particulier un rayon de transition prédéfini, et/ou
- dans le cas de la saillie (130) en forme de nez et/ou du creux (120) en forme de baie, les flancs qui se rejoignent sont rectilignes.

12. Agencement selon l'une des revendications précédentes,
**caractérisé en ce que**
la zone dans laquelle les flancs se rejoignent ou la zone de transition courbe entre les flancs qui se rejoignent forme l'axe de pivotement (S) pour le mouvement de pivotement du levier (100) autour de la broche (43) formant pivot.

13. Agencement selon l'une des revendications précédentes,
**caractérisé en ce que**
les flancs et, si elles existent, les zones de transition courbes permettent un mouvement du levier (100) transversalement à la direction de la force élastique (F) induite par le ressort (110).

14. Agencement selon l'une des revendications précédentes,
**caractérisé en ce que**
la surface de la section transversale de l'ouverture (101) et la surface de la section transversale de la broche (43) formant pivot sont chacune exemptes de symétrie de rotation.

15. Enrouleur (1) de ceinture,
**caractérisé en ce que**
l'enrouleur de ceinture (1) est équipé d'un agencement selon l'une des revendications précédentes.
